(19) Europäisches Patentamt / European Patent Office / Office européen des brevets

(11) **EP 3 709 047 A1**

(12) **EUROPEAN PATENT APPLICATION**

(43) Date of publication:
**16.09.2020 Bulletin 2020/38**

(51) Int Cl.:
**G01S 5/10** *(2006.01)*    **G01S 5/02** *(2010.01)*

(21) Application number: **19162277.8**

(22) Date of filing: **12.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Technische Universität Graz**
**8010 Graz (AT)**

(72) Inventors:
• **GROSSWINDHAGER, Bernhard**
**8010 Graz (AT)**

• **STOCKER, Michael**
**8046 Stattegg (AT)**
• **RATH, Michael**
**8010 Graz (AT)**
• **BOANO, Carlo Alberto**
**8010 Graz (AT)**
• **RÖMER, Kay Uwe**
**8042 Graz (AT)**

(74) Representative: **Weiser & Voith**
**Patentanwälte Partnerschaft**
**Kopfgasse 7**
**1130 Wien (AT)**

(54) **METHOD AND SYSTEM FOR DETERMINING A POSITION OF A NODE**

(57)    The present invention relates to a method and a system (3) for determining a position ($p_{T1}$) of a node ($T_1$) in an environment (1) which has at least three anchors ($A_i$) at different predetermined positions ($p_{Ai}$), comprising:

wirelessly broadcasting a trigger signal (G) from one of the anchors ($A_1$);

in each other one of the anchors ($A_i$), responding to the trigger signal (G) by wirelessly broadcasting a response signal ($R_i$) upon lapse of a known delay ($\delta_i$) from the receipt of the trigger signal (G);

in the node ($T_1$), receiving at least three receive signals ($C_i$) of a set (S) comprised of the trigger signal (G) and all response signals ($R_i$), each at a node receive time ($\tau_{ni}$), and determining at least two time differences ($\Delta\tau_{ij}$), each between a different pair of all node receive times ($\tau_{ni}$);

calculating the position ($p_{T1}$) of the node ($T_1$) from the predetermined positions ($p_{Ai}$), the known delays ($\delta_i$), and the determined time differences ($\Delta\tau_{ij}$).

*Fig. 1*

EP 3 709 047 A1

EP 3 709 047 A1

**Description**

The present invention relates to a method and a system for determining a position of a node in an environment which has at least three anchors at different predetermined positions.

An established way of determining a position of a device (here: a "node") or a person carrying the node makes use of a global navigation satellite system (GNSS) such as GPS. This is particularly suitable for outdoor navigation at an accuracy in the range of a few meters. However, the limited accuracy and indoor-availability of GNSS signals raise the demand for alternative techniques.

One family of such techniques is based on providing a number of anchors at different predetermined positions in the environment, e.g., an indoor environment, in which the position of the node shall be determined, as mentioned at the outset. Current systems calculate the position of the node by means of the node's distances from the predetermined positions of the anchors using the times of flight (TOF) of signals transmitted between the anchors and the node. Distance and TOF are seen as equivalents linked by the propagation speed of the signal according to the known relation v = d/t (speed = distance/time). The signals are typically radio signals, e.g., narrowband, wideband, millimetre wave, or ultra-wideband (UWB) signals depending on the environment and the required accuracy. When the distances of the node from the anchors have been determined, finding the position of the node is simple geometric calculus.

While current TOF methods reach an accuracy in the range of decimetres, they require a complex time synchronisation of the anchors and the node and several signals to be exchanged for each position determination, such that both the energy consumption and the channel load are rather high.

Two way ranging (TWR) is a variant of TOF where the node requests a time-stamped response from each anchor separately. Thereby, time stamping replaces synchronisation but the channel load and the node's energy consumption are even higher.

A method that reduces channel load is based on time difference of arrival (TDOA) measurement. E.g., A. Ledergerber et al., A Robot Self-Localization System using One-Way Ultra-Wideband Communication, Proceedings of the International Conference on Intelligent Robots and Systems (IROS), 2015, describe a TDOA-method using time-slotting. According to this method each anchor transmits a time-stamped send signal to the node at a predetermined time slot such that the node can self-localise based on the TDOA of the send signals received from the anchors. Similar to the above mentioned TOF-methods, this method requires a complex, very tight time synchronisation of the anchors and is, thus, inflexible in use. Moreover, the node consumes time and energy when retrieving the time stamps from the received send signals.

A TDOA-method that does not require time-slotting was described, by J. Tiedemann et al., Atlas: An Open-Source TDOA-based Ultra-Wideband Localization System, Proc. of the IPIN Conf., 2016. Therein, the node broadcasts a signal and the TDOA of the signal in the anchors is used to determine the position of the node. While the position can be determined on the basis of only one signal broadcast by the node, the anchors still need complex time synchronisation. Moreover, this method does not scale well with the number of nodes in the environment, firstly, as a separate signal for each node is required and, secondly, because collision avoidance on the radio channel has to be introduced.

P. Corbalán et al., Concurrent Ranging in Ultra-wideband Radios: Experimental Evidence, Challenges, and Opportunities, Proc. of the 15th International Conference on Embedded Wireless Systems and Networks (EWSN), 2018, introduced a special type of TWR, where the node broadcasts a single request signal and all anchors immediately respond thereto for determining the node's distances to the anchors. Thereby, channel resources are saved in comparison with the above mentioned TDOA method. However, this method also suffers the problem of poor scalability. Moreover, depending on the position of the node and the anchors in the environment, there is a considerable risk of overlap in the response signals such that the time stamps cannot be retrieved and the distances cannot be determined at all. This risk further increases with the number of anchors.

All that makes the method unfeasible for current applications, e.g., Internet of Things (IoT) applications, where sometimes dozens or even hundreds of nodes are located in the same environment and where nodes and anchors are often flexibly exchanged.

It is an object of the invention to provide a method for determining a position of a node in an environment which is both accurate and efficient.

According to a first aspect of the invention, this object is achieved with a method of the type mentioned at the outset, comprising:

wirelessly broadcasting a trigger signal from one of the anchors at a trigger time;
in each other one of the anchors, receiving the trigger signal and responding to the receipt of the trigger signal by wirelessly broadcasting a response signal upon lapse of a known delay from the receipt of the trigger signal;
in the node, receiving at least three receive signals of a set comprised of the trigger signal and all response signals, each receive signal at a node receive time, and determining at least two time differences, each time difference between a different pair of all node receive times;

2

calculating the position of the node from the predetermined positions, the known delays, and the determined time differences.

The method of the invention does not require a complex time synchronisation of the anchors and the node. As no time stamp has to be included in the receive signals, the signal length can be reduced, e.g., by broadcasting only message headers or simple pulses as signals, which helps avoiding signal overlaps. Moreover, the channel load is low, particularly with a multiplicity of nodes. Thereby, a high update rate in the position determination can be achieved for moving nodes when necessary. Depending on where the step of calculating the position is performed, the channel load may even be completely independent of the number of nodes in the environment. Furthermore, as the method does not require a signal being transmitted by the node, it is particularly energy saving on the node's side, such that the size and weight of the node, which is usually battery-supplied, can be kept low.

For reducing the risk of receiving overlapping response signals in the node, the delay of each anchor is preferably predetermined in such a way that it is different from the delays of all other anchors. In a favourable variant thereof, where the response signals are pulses of a known pulse duration, the delays differ from each other according to:

$$\left| \delta_i - \delta_j \right| > d_u + \frac{2 \cdot a_{\max}}{s_p}$$

with:

$\delta_i, \delta_j$    being the delays of the i-th and the j-th anchor, respectively,
$d_u$    being the pulse duration of the response signals,
$a_{\max}$    being a largest distance between two anchors in the environment, and
$s_p$    being the propagation speed of the response signals in the environment.

Thereby, an overlap in response signals is reliably prevented.

In a particularly preferred embodiment of the method said step of calculating is performed in the node. As each node is self-localising in this case, the positions of even a vast number of nodes can be determined in the environment without any further channel load. Moreover, the nodes save energy by not transmitting a signal for position determination.

The predetermined positions and/or the delays of the anchors may be known "system-wide" in the system comprised of the anchors and the node, e.g., after an initialisation step. In an advantageous embodiment of the method, however, said one anchor which broadcasts the trigger signal sends information on the predetermined positions and/or on the delays to the node, preferably with the trigger signal. Thereby, changes in positions and/or delays can flexibly be communicated and initialisation can be omitted. Alternatively or additionally, each of said other anchors sends information on its predetermined position and/or its delay to the node, preferably with the response signal. Thereby, the flexibility is further increased, as anchors can easily be changed and/or added to the environment.

In a favourable embodiment, the method further comprises:

in said one anchor which broadcasts the trigger signal, receiving the response signals of all of said other anchors, each response signal at an anchor receive time, determining, for each other anchor, the delay of that anchor by means of the trigger time, the respective anchor receive time and the predetermined positions of the anchors, and, prior to said step of calculating, making known the determined delays for calculating the position of the node.

Thereby the actual delay of each anchor's response signal can be determined and made known - either once or on a regular basis - and used for accurately determining the position of the node in the step of calculating. Moreover, devices of lower accuracy or time resolution may be employed for at least some of said other anchors.

Therein, it is advantageous when said making known is performed by including information on the determined delays in a subsequent trigger signal. No further channel load is generated in this case.

While the principle of this method can be applied using a wide variety of types of signals, e.g., radio signals (including pulses of light) or even acoustic signals, it is favourable when the trigger signal and the response signals are ultra-wideband (UWB) radio signals. Due to the very short pulse duration that can be achieved with UWB signals, a position resolution in the range of a few centimetres or decimetres can be achieved and overlapping signals are avoided, which is particularly advantageous in reflective indoor environments.

In a further advantageous embodiment, each of said anchors has an identifier which is included in the trigger or response signal, respectively, and the node receive time of the receive signal of each anchor is derived from the first receive signal which includes the identifier of that anchor. Thereby, mistakes in correlating a receive signal with an anchor can be avoided. Moreover, in environments in which signals are reflected, e.g., at walls, a receive signal may be distinguished from its reflection ("echo").

According to a second aspect, the present invention creates a system for determining a position of a node in an environment, which system comprises the node and at least three anchors for mounting at different predetermined positions in the environment, wherein

at least one of the anchors is configured to wirelessly broadcast a trigger signal at a trigger time,

each other one of the anchors is configured to receive the trigger signal and to respond to the receipt of the trigger signal by wirelessly broadcasting a response signal upon lapse of a known delay from the receipt of the trigger signal,

the node is configured to receive at least three receive signals of a set comprised of the trigger signal and all response signals, each receive signal at a node receive time, and to determine at least two time differences, each time difference between a different pair of all node receive times, and

the system is configured to calculate the position of the node from the predetermined positions, the known delays, and the determined time differences.

Relating to further embodiments of the system and the advantages thereof, it is referred to the above statements on the method of the invention.

The invention will now be described in further detail by means of an exemplary embodiment thereof under reference to the enclosed drawings in which:

Fig. 1 shows an environment with a system comprising anchors and a node according to the invention in a perspective view;

Fig. 2 shows an amplitude-over-time diagram of exemplary receive signals received from the anchors by the node of Fig. 1; and

Fig. 3 shows an amplitude-over-time diagram of exemplary response signals received from the other anchors by one anchor of Fig. 1.

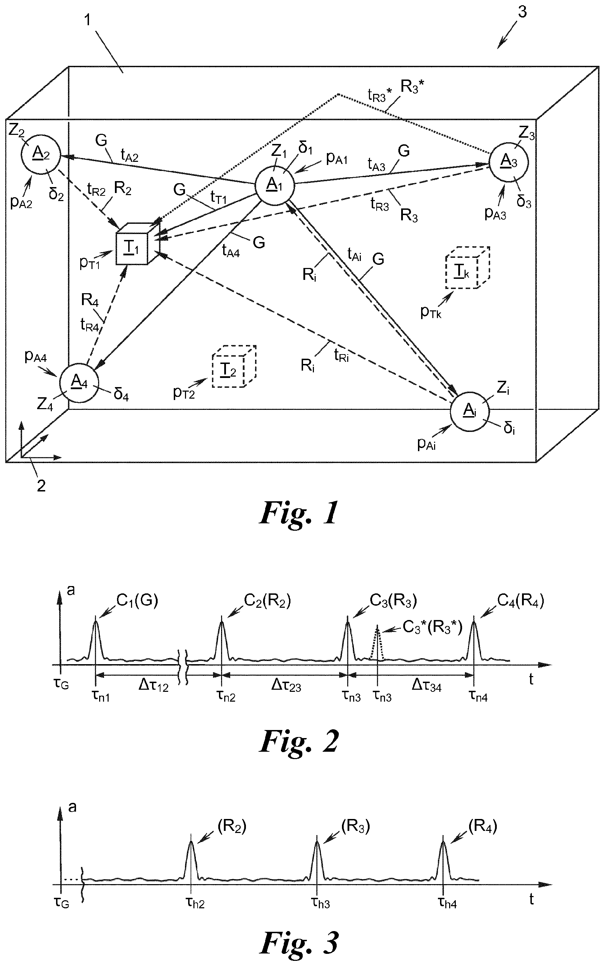

Fig. 1 shows an environment 1, e.g., an indoor environment, in which a device (sometimes referred to as "tag", herein called "node") $T_1$ is located at a position $p_{T1}$ that is to be determined relative to a coordinate system 2 of the environment 1. The node $T_1$ is optionally movable in the environment 1.

In the present example, the coordinate system 2 is three-dimensional; when, e.g., only a longitude and a latitude of the position $p_{T1}$ of the node $T_1$ in the environment 1 shall be determined, both the coordinate system 2 and the position $p_{T1}$ of the node $T_1$ may be two-dimensional.

The environment 1 further comprises a number of at least three anchors $A_1$, $A_2$, ..., generally $A_i$, which are mounted at different predetermined positions $p_{A1}$, $p_{A2}$, ..., generally $p_{Ai}$, in the environment 1, i.e., relative to the coordinate system 2 thereof. Optionally, the environment 1 comprises not only one node $T_1$ but several nodes $T_1$, $T_2$, ..., generally $T_k$, which are located at respective positions $p_{T1}$, $p_{T2}$, ..., generally $p_{Tk}$. The anchors $A_i$ and nodes $T_k$ together form a system 3, which, in optional embodiments, may comprise further devices, e.g., a control unit.

The anchors $A_i$, the nodes $T_k$ and the optional further devices wirelessly communicate with one another for determining the position $p_{Tk}$ of each node $T_k$, as shall be described in the following for the exemplary node $T_1$.

To this end, one of the anchors $A_i$ is configured to wirelessly broadcast a trigger signal G at a trigger time $\tau_G$ (Fig. 2). In the example of Fig. 1, said one anchor is the anchor $A_1$. However, the anchor $A_i$ which wirelessly broadcasts the trigger signal G could be any other one of the anchors $A_i$ or could even change from one to another trigger signal G.

The broadcast trigger signal G is received in each other one of the anchors $A_i$ (here: in the anchors $A_2$, $A_3$, $A_4$). Due to the propagation speed of the trigger signal G in the environment 1, which, in case of radio signals, is the speed of light, the trigger signal G is received in each other anchor $A_i$ after a respective trigger signal propagation time $t_{Ai}$ (here: the trigger signal propagation times $t_{A2}$, $t_{A3}$, $t_{A4}$) has elapsed. As the positions $p_{Ai}$ of the anchors $A_i$ are predetermined, the respective trigger signal propagation times $t_{Ai}$ are known or can be determined.

Each of said other anchors $A_i$ is configured to respond to the receipt of the trigger signal G upon lapse of a known delay $\delta_i$ (here: the delays $\delta_2$, $\delta_3$, $\delta_4$) from the respective receipt of the trigger signal G. As a response, each of said other anchors $A_i$ wirelessly broadcasts a response signal $R_i$ (here: the response signals $R_2$, $R_3$, $R_4$). It shall be noted that also said one anchor $A_1$ which wirelessly broadcasts a trigger signal G may optionally respond thereto by wirelessly broadcasting a response message $R_1$ after its known delay $\delta_1$ has elapsed.

In this example, both the trigger signal G and the response signals $R_i$ are ultra-wideband (UWB) radio signals. In other embodiments, the trigger and/or response signals G, $R_i$ may be other types of radio signals, e.g., millimetre wave, narrowband, or wideband radio signals, optical signals, particularly laser signals, or even acoustic signals and/or could be mixed from these types.

As shown in Fig. 2, the node $T_1$ is configured to receive at least three receive signals $C_1$, $C_2$, ..., generally $C_i$, of a set S comprised of the trigger signal G and all response signals $R_i$. Hence, the at least three receive signals $C_i$ are either a receive signal $C_i(G)$ of the trigger signal G and receive signals $C_i(R_i)$ of at least two response signals $R_i$ or they are receive signals $C_i(R_i)$ of at least three response signals $R_i$. Moreover, each receive signal $C_i$ is received in the node $T_1$ at a respective node receive time $\tau_{n1}$, $\tau_{n2}$, ..., generally $\tau_{ni}$. In particular, each receive signal $C_i$ of a response signal

$R_i$ is received in the node $T_1$ when a respective response signal propagation time $t_{Ri}$ has elapsed after the broadcasting of that response signal $R_i$, and the receive signal $C_i$ (here: $C_1$) of the trigger signal G is received in the node $T_1$ when a trigger signal propagation time $t_{T1}$ has elapsed after the broadcasting of the trigger signal G.

The node $T_1$ is further configured to determine at least two time differences $\Delta\tau_{ij}$. Each time difference $\Delta\tau_{ij}$ is determined between a different pair of all node receive times $\tau_{ni}$, for example the i-th and the j-th node receive times $\tau_{ni}$, $\tau_{nj}$. I.e., the time difference $\Delta\tau_{12}$ is determined as a difference of the node receive times $\tau_{n1}$ and $\tau_{n2}$ of the receive signals $C_1$ and $C_2$, the time difference $\Delta\tau_{23}$ is determined as a difference of the node receive times $\tau_{n2}$ and $\tau_{n3}$ of the receive signals $C_2$ and $C_3$, and so forth. In the present example, where the set S comprises also the trigger signal G, the time difference $\Delta\tau_{12}$ is determined from the node receive times $\tau_{n1}$, $\tau_{n2}$ of the trigger signal G and the response signal $R_2$.

Generally, the trigger and/or response signals G, $R_i$ can be correlated with the respective anchors $A_i$ on the basis of their node receive times $\tau_{ni}$ and the known delays $\delta_i$. In an optional embodiment, though, each anchor $A_i$ has an identifier $Z_i$ which it includes in its trigger and/or response signal G, $R_i$, respectively, such that the trigger and/or response signal G, $R_i$ can be correlated with the respective anchor $A_i$ by means of the identifier $Z_i$.

In an environment 1 where the trigger and/or response signals G, $R_i$ may be reflected at, e.g., surrounding walls or the like, the identifiers $Z_i$ can help to distinguish a receive signal from its reflection ("echo"). This case is depicted in Fig. 1 for the anchor $A_3$, the response signal $R_3$ of which is reflected in the environment 1 such that a reflected or echo response signal $R_3{}^*$ (dotted line in Fig. 1) is received in the node $T_1$ as an echo receive signal $C_3{}^*$ (dotted pulse in Fig. 2). The echo receive signals $C_i{}^*$ have to be sorted out from the direct ("line of sight") receive signals $C_i$ to correctly determine the position $p_{T1}$ of the node $T_1$. To this end, the node receive time $\tau_{ni}$ of the receive signal $C_i$ of each anchor $A_i$ may then be derived from the first receive signal $C_i$ which includes the identifier $Z_i$ of that anchor $A_i$.

From the predetermined positions $p_{Ai}$ of the anchors $A_i$ the known delays $\delta_i$ and the determined time differences $\Delta\tau_{ij}$ the position $p_{T1}$ of the node $T_1$ can be calculated. The time differences $\Delta\tau_{ij}$ of the node receive times $\tau_{ni}$, $\tau_{nj}$ of the receive signals $C_i$, $C_j$ result from:

$$\Delta\tau_{ij} = \left(t_{Aj} + \delta_j + t_{Rj}\right) - \left(t_{Ai} + \delta_i + t_{Ri}\right) = \left(\delta_j - \delta_i\right) + \left(t_{Aj} + t_{Rj}\right) - \left(t_{Ai} + t_{Ri}\right) \quad (\text{eq. 1})$$

In equation (1) both the delays $\delta_i$, $\delta_j$ and the trigger signal propagation times $t_{Ai}$, $t_{Aj}$ are known or determined.

According to equation (1) and from the predetermined positions $p_{Ai}$ of the anchors $A_i$, the position $p_{T1}$ of the node $T_1$ can be determined using any localisation algorithm known in the art, e.g., trilateration algorithms, least square algorithms etc.

When the position $p_{T1}$ of the node $T_1$ is to be calculated in two-dimensions, i.e., in a plane spanned by three anchors $A_i$, at least two time differences $\Delta\tau_{ij}$ have to be determined between the node receive times $\tau_{ni}$ of receive signals $C_i$ of three anchors $A_i$. A three-dimensional position $p_{T1}$ of the node $T_1$ can be calculated on the basis of at least three time differences $\Delta\tau_{ij}$ derived from receive signals $C_i$ of four anchors $A_i$ the positions $p_{Ai}$ of which are not in one and the same plane. However, more than three or four anchors $A_i$, i.e., their predetermined positions $p_{Ai}$ and delays $\delta_i$, and more than two or three time differences $\Delta\tau_{ij}$ may be used to calculate the position $p_{T1}$ of the node $T_1$ for increased accuracy and robustness.

In a case where the time difference $\Delta\tau_{1i}$ between the node receive times $\tau_{n1}$, $\tau_{ni}$ of the trigger signal G and a response signal $R_i$ is determined, the equation (1) is modified accordingly to reflect that, for the trigger signal G, there is no delay $\delta_1$ and only the one signal propagation time $t_{T1}$ to the node $T_1$ - which corresponds to the response signal propagation times $t_{R1}$ of the respective anchor $A_1$ - to be considered.

The position $p_{T1}$ of the node $T_1$ may be calculated in any device of the system 3, e.g., in one of the anchors $A_i$, particularly said one anchor $A_1$ which broadcasts the trigger signal G, or in an optional control unit when the determined time differences $\Delta\tau_{ij}$ are transmitted thereto from the node $T_1$. In an optional embodiment, the node $T_1$ itself is configured to calculate its position $p_{T1}$, i.e., to self-localise, such that said calculating is performed in the node $T_1$.

In another embodiment, information on the delays $\delta_i$ and/or on said predetermined positions $p_{Ai}$ of the anchors $A_i$ may be sent to the node $T_1$ by said one anchor $A_1$ which has sent the trigger signal G. This may be done with a separate signal or with the trigger signal G. Moreover, each of said other anchors $A_i$ may send information on its own delay $\delta_i$ and/or on its own predetermined position $p_{Ai}$ to the node $T_1$, e.g., with a separate signal or with the response signal $R_i$. In a further embodiment, however, the information on the delays $\delta_i$ and/or on said predetermined positions $p_{Ai}$ of the anchors $A_i$ is known in the system 3, e.g., pre-programmed in each device of the system 3 or shared during an initialisation step.

In one embodiment, the delay $\delta_i$ of each anchor $A_i$ is predetermined such that it is different from the delays $\delta_i$ of all other anchors $A_i$. The difference between two delays $\delta_i$ may, e.g., be up to 300 ns depending on the environment 1 and the predetermined positions $p_{Ai}$ of the anchors $A_i$. In a variant, the response signals $R_i$ are pulses of a known pulse duration (e.g., 2 ns for UWB signals). Therein, the delays $\delta_i$, $\delta_j$ of the i-th and the j-th anchors $A_i$, $A_j$ differ from

each other according to:

$$\left|\delta_i - \delta_j\right| > d_u + \frac{2 \cdot a_{max}}{s_p} \qquad \text{(eq. 2)}$$

with:

$d_u$      being the pulse duration of the response signal $R_i$,

$a_{max}$      being a largest distance between two anchors $A_i$ in the environment 1, and

$s_p$      being the propagation speed of the response signal $R_i$ in the environment 1.

Fig. 3 shows and optional embodiment where the anchor $A_1$ which broadcasts the trigger signal G determines, for each other anchor $A_i$, the delay $\delta_i$ of that anchor $A_i$, e.g., when the delays $\delta_i$ are not predetermined or subject to inaccuracies or drift. To this end, the anchor $A_1$ may itself receive the response signals $R_i$ of all of said other anchors $A_i$, each at an anchor receive time $\tau_{hi}$ (here: the anchor receive times $\tau_{h2}$, $\tau_{h3}$, $\tau_{h4}$). The anchor $A_1$ then determines, for each other anchor $A_i$, the actual delay $\delta_i$ of that anchor $A_i$ by means of the trigger time $\tau_G$, the respective anchor receive time $\tau_{hi}$ and the predetermined positions $p_{Ai}$ of the anchors $A_i$. Subsequently, the anchor $A_1$ relays information on the determined delays $\delta_i$ such that they are known for calculating the position $p_{T1}$ of the node $T_1$ in the environment 1. For example, the anchor $A_1$ may include the information on the determined delays $\delta_i$ in a subsequent trigger signal G to "make it known" system-wide; alternatively, the information on the determined delays $\delta_i$ is sent separately, i.e., using a separate signal, by the anchor $A_1$. In the case when the one anchor $A_1$ calculates the node's position $p_{T1}$ the information need not be sent at all.

The disclosed subject-matter is not restricted to the specific embodiments described in detail herein, but encompasses all variants, combinations and modifications thereof that fall within the framework of the appended claims.

**Claims**

1. A method for determining a position ($p_{T1}$) of a node ($T_1$) in an environment (1) which has at least three anchors ($A_i$) at different predetermined positions ($p_{Ai}$), comprising:

     wirelessly broadcasting a trigger signal (G) from one of the anchors ($A_1$) at a trigger time ($\tau_G$);
     in each other one of the anchors ($A_i$), receiving the trigger signal (G) and responding to the receipt of the trigger signal (G) by wirelessly broadcasting a response signal ($R_i$) upon lapse of a known delay ($\delta_i$) from the receipt of the trigger signal (G);
     in the node ($T_1$), receiving at least three receive signals ($C_i$) of a set (S) comprised of the trigger signal (G) and all response signals ($R_i$), each receive signal ($C_i$) at a node receive time ($\tau_{ni}$), and determining at least two time differences ($\Delta\tau_{ij}$), each time difference ($\Delta\tau_{ij}$) between a different pair of all node receive times ($\tau_{ni}$);
     calculating the position ($p_{T1}$) of the node ($T_1$) from the predetermined positions ($p_{Ai}$), the known delays ($\delta_i$), and the determined time differences ($\Delta\tau_{ij}$).

2. The method according to claim 1, wherein the delay ($\delta_i$) of each anchor ($A_i$) is predetermined such that it is different from the delays ($\delta_i$) of all other anchors ($A_i$).

3. The method according to claim 2, wherein the response signals ($R_i$) are pulses of a known pulse duration, and wherein the delays ($\delta_i$) differ from each other according to:

$$\left|\delta_i - \delta_j\right| > d_u + \frac{2 \cdot a_{max}}{s_p}$$

with:

     $\delta_i$, $\delta_j$ being the delays of the i-th and the j-th anchor ($A_i$, $A_j$), respectively,
     $d_u$ being the pulse duration of the response signal ($R_i$),

$a_{max}$ being a largest distance between two anchors ($A_i$) in the environment (1), and

$s_p$ being the propagation speed of the response signal ($R_i$) in the environment (1).

4. The method according to any one of claims 1 to 3, wherein said step of calculating is performed in the node ($T_1$).

5. The method according to any one of claims 1 to 4, wherein said one anchor ($A_1$) sends information on the predetermined positions ($p_{Ai}$) and/or on the delays ($\delta_i$) to the node ($T_1$), preferably with the trigger signal (G).

6. The method according to any one of claims 1 to 5, wherein each of said other anchors ($A_i$) sends information on its predetermined position ($p_{Ai}$) and/or on its delay ($\delta_i$) to the node ($T_1$), preferably with the response signal ($R_i$).

7. The method according to any one of claims 1 to 6, further comprising:
in said one anchor ($A_1$), receiving the response signals ($R_i$) of all of said other anchors ($A_i$), each response signal ($R_i$) at an anchor receive time ($\tau_{hi}$), determining, for each other anchor ($A_i$), the delay ($\delta_i$) of that anchor ($A_i$) by means of the trigger time ($\tau_G$), the respective anchor receive time ($\tau_{hi}$) and the predetermined positions ($p_{Ai}$) of the anchors ($A_i$), and, prior to said step of calculating, making known the determined delays ($\delta_i$) for calculating the position ($p_{T1}$) of the node ($T_1$).

8. The method according to claim 7, wherein said making known is performed by including information on the determined delays ($\delta_i$) in a subsequent trigger signal (G).

9. The method according any one of claims 1 to 8, wherein the trigger signal (G) and the response signals ($R_i$) are ultra-wideband radio signals.

10. The method according any one of claims 1 to 9, wherein each of said anchors ($A_i$) has an identifier ($Z_i$) which is included in the trigger or response signal (G, $R_i$), respectively, and wherein the node receive time ($\tau_{ni}$) of the receive signal ($C_i$) of each anchor ($A_i$) is derived from the first receive signal ($C_i$) which includes the identifier ($Z_i$) of that anchor ($A_i$).

11. A system for determining a position ($p_{T1}$) of a node ($T_1$) in an environment (1), the system (3) comprising the node ($T_1$) and at least three anchors ($A_i$) for mounting at different predetermined positions ($p_{Ai}$) in the environment (1), **characterized in that**
at least one of the anchors ($A_i$) is configured to wirelessly broadcast a trigger signal (G) at a trigger time ($\tau_G$),
wherein each other one of the anchors ($A_i$) is configured to receive the trigger signal (G) and to respond to the receipt of the trigger signal (G) by wirelessly broadcasting a response signal ($R_i$) upon lapse of a known delay ($\delta_i$) from the receipt of the trigger signal (G),
wherein the node ($T_1$) is configured to receive at least three receive signals ($C_i$) of a set (S) comprised of the trigger signal (G) and all response signals ($R_i$), each receive signal ($C_i$) at a node receive time ($\tau_{ni}$), and to determine at least two time differences ($\Delta\tau_{ij}$), each time difference ($\Delta\tau_{ij}$) between a different pair of all node receive times ($\tau_i$), and wherein the system (3) is configured to calculate the position ($p_{T1}$) of the node ($T_1$) from the predetermined positions ($p_{Ai}$), the known delays ($\delta_i$), and the determined time differences ($\Delta\tau_{ij}$).

12. The system according to claim 11, wherein the delay ($\delta_i$) of each anchor ($A_i$) is predetermined such that it is different from the delays ($\delta_i$) of all other anchors ($A_i$).

13. The system according to claim 12, wherein the response signals ($R_i$) are pulses of a known pulse duration, and wherein the delays ($\delta_i$) differ from each other according to:

$$\left| \delta_i - \delta_j \right| > d_u + \frac{2 \cdot a_{max}}{s_p}$$

with:

$\delta_i$, $\delta_j$ being the delays of the i-th and the j-th anchor ($A_i$, $A_j$), respectively,

$d_u$ being the pulse duration of the response signal ($R_i$),

$a_{max}$ being a largest distance between two anchors ($A_i$) in the environment (1), and

$s_p$ being the propagation speed of the response signal ($R_i$) in the environment (1).

14. The system according to any one of claims 11 to 13, wherein the node ($T_1$) is configured to perform said calculating.

15. The system according to any one of claims 11 to 14, wherein said one anchor ($A_1$) is further configured to receive the response signals ($R_i$) of all of said other anchors ($A_i$), each at an anchor receive time ($\tau_{hi}$), to determine, for each other anchor ($A_i$), the delay ($\delta_i$) of that anchor ($A_i$) by means of the trigger time ($\tau_G$), the respective anchor receive time ($\tau_{hi}$) and the predetermined positions ($p_{Ai}$) of the anchors ($A_i$), and to, prior to said calculating, make known the determined delays ($\delta_i$) for calculating the position ($p_{T1}$) of the node ($T_1$) in the environment (1), preferably by including information on the determined delays ($\delta_i$) in a subsequent trigger signal (G).

*Fig. 1*

*Fig. 2*

*Fig. 3*

Europäisches
Patentamt
European
Patent Office
Office européen
des brevets

# EUROPEAN SEARCH REPORT

**Application Number**

EP 19 16 2277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/266907 A1 (TAYLOR JR DAVID W A [US] ET AL) 18 September 2014 (2014-09-18) * fig. 3, 7, 8, 12; par. 6, 51-53, 60-62, 68-83, 90-95, 148-156, 161, 165, 173, 186 * | 1-15 | INV. G01S5/10 ADD. G01S5/02 |
| | ----- | | |
| X | US 2013/337835 A1 (CHOI OK-JAE [KR]) 19 December 2013 (2013-12-19) * fig. 3, 4; par. 43-51; 54, 55, 57-78 * | 1-15 | |
| | ----- | | |
| X | US 6 054 950 A (FONTANA ROBERT J [US]) 25 April 2000 (2000-04-25) * col. 4, l. 29 to col. 6, l. 45 * | 1,9,11 | |
| | ----- | | |

**TECHNICAL FIELDS SEARCHED (IPC)**

G01S

The present search report has been drawn up for all claims

| Place of search | Date of completion of the search | Examiner |
|---|---|---|
| Munich | 18 September 2019 | González Moreno, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 2277

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2019

| Patent document cited in search report | | Publication date | Patent family member(s) | | Publication date |
|---|---|---|---|---|---|
| US 2014266907 | A1 | 18-09-2014 | US | 2014266907 A1 | 18-09-2014 |
| | | | US | 2017234965 A1 | 17-08-2017 |
| US 2013337835 | A1 | 19-12-2013 | CN | 103261911 A | 21-08-2013 |
| | | | EP | 2653886 A1 | 23-10-2013 |
| | | | US | 2013337835 A1 | 19-12-2013 |
| | | | WO | 2012081740 A1 | 21-06-2012 |
| US 6054950 | A | 25-04-2000 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. LEDERGERBER et al.** A Robot Self-Localization System using One-Way Ultra-Wideband Communication. *Proceedings of the International Conference on Intelligent Robots and Systems (IROS),* 2015
- **J. TIEDEMANN et al.** Atlas: An Open-Source TDOA-based Ultra-Wideband Localization System, Proc. of the IPIN Conf. 2016

- **P. CORBALÁN et al.** Concurrent Ranging in Ultra-wideband Radios: Experimental Evidence, Challenges, and Opportunities. *Proc. of the 15th International Conference on Embedded Wireless Systems and Networks (EWSN),* 2018